# EUROPEAN PATENT SPECIFICATION

(11) **EP 2 804 718 B1**
(45) Date of publication and mention of the grant of the patent: **08.03.2017**
(21) Application number: 13738665.2
(22) Date of filing: 16.01.2013
(51) Int. Cl.: F01D 5/00, F01D 5/28

(54) **METHOD OF SURFACE TREATMENT FOR DOVETAIL IN GAS TURBINE ENGINE FAN BLADE**
VERFAHREN ZUR OBERFLÄCHENBEHANDLUNG VON SCHWALBENSCHWANZ BEI EINER GEBLÄSESCHAUFEL EINES GASTURBINENMOTORS
PROCÉDÉ DE TRAITEMENT DE SURFACE POUR QUEUE D'ARONDE DANS UNE PALE DE VENTILATEUR DE TURBINE À GAZ

(30) Priority: 17.01.2012 US 201213351519
(43) Date of publication of application: 26.11.2014
(73) Proprietor: United Technologies Corporation, Farmington, CT 06032 (US)
(72) Inventor: SEETHARAMAN, Venkatarama, K., Rocky Hill, Connecticut 06067 (US)
(74) Representative: Leckey, David Herbert
(86) International application number: PCT/US2013/021689
(87) International publication number: WO 2013/109595

(56) References cited:
- US-A1- 2002 124 402
- US-A1- 2008 155 802
- US-B2- 7 384 244
- US-B2- 7 887 288
- US-B2- 8 024 846

## Description

### BACKGROUND

This application relates to a surface treatment method for treating a dovetail in a blade.

Gas turbine engines are known, and typically have a fan delivering air to a compressor. From the compressor, the air passes downstream into a combustion section where it is mixed with fuel and burned. Products of that combustion pass downstream over turbine rotors which in turn drive the fan to rotate.

The fan may include a plurality of separate blades mounted into a rotor. The blades have an airfoil which moves the air, and a radially inner portion, known as a dovetail, which is received within a slot in the rotor.

The dovetail is subject to high stress during operation of the gas turbine engine. Thus, it presents challenges to a designer of a fan blade.

One method that has been proposed to address the stresses applied into the dovetail is to utilize a burnishing operation on the dovetail. A burnishing operation will induce stresses within the part. These induced stresses are residual compressive stresses that can be induced into the part to a desired depth. The induced stresses counter applied stresses during operation to result in an overall lower stress level.

The burnishing operation does provide good control over the level of induced stresses and the depth into the material. However, burnishing typically requires a somewhat flat surface, and thus, complex surfaces may not be candidates for burnishing.

Once a burnishing operation has been applied to a part, surfaces that have not been burnished may have increased stresses or other changes which may be undesirable.

A method of peening blade roots is disclosed in US 2002/0124402 A1. Methods of producing a blade having residual compressive stresses are disclosed in US 7887288 B2 and US 7384244 B2.

### SUMMARY

The present invention provides a method of surface treating a dovetail in a blade, as set forth in claim 1.

These and other features of this application will be better understood from the following specification and drawings, the following of which is a brief description:

### BRIEF DESCRIPTION OF THE DRAWINGS

Figure 1A shows a fan blade.
Figure 1B shows the fan blade mounted into a rotor.
Figure 2 shows a first method step according to this invention.
Figure 3 shows a subsequent step.

### DETAILED DESCRIPTION

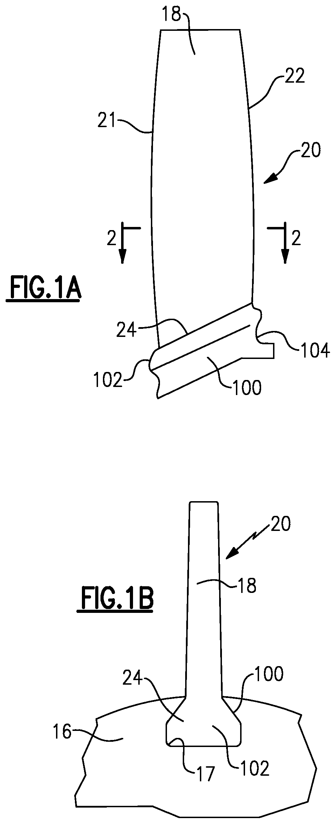

Figure 1A shows a fan blade 20 having an airfoil 18 extending radially outwardly of a dovetail 24. The airfoil can be said to have a leading edge 21 and a trailing edge 22. The dovetail 24 has circumferential side surfaces 100, and axial ends 102 and 104. As can be appreciated from Figure 1A, the axial ends 102 and 104 are not regular surfaces, but have complex curved shapes. The circumferential sides 100 have generally regular shapes along an axial length.

Figure 1B shows the fan blade 20 mounted within a slot 17 in a rotor 16. As can be appreciated, the sides 100 receive a good deal of stress when the rotor 16 is rotating, as the rotational force is transmitted through the sides 100. The ends 102 and 104 do not receive the same forces. As shown, the circumferential sides 100 have a more regular surface than the ends 102 and 104.

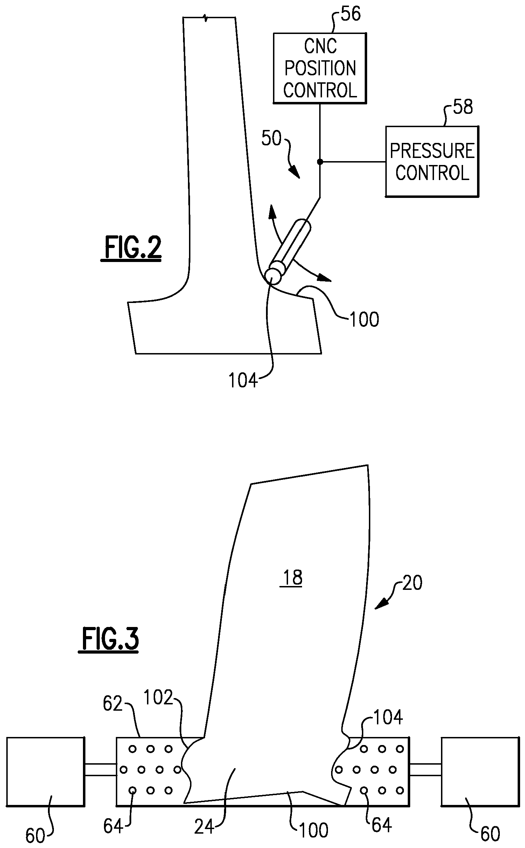

In order to surface treat the fan blade dovetail to withstand such forces, a first surface treatment step, burnishing, is shown in Figure 2. The term burnishing can be generally described as bringing a tool into contact to physically treat surfaces on a workpiece.

A burnishing operation with a burnishing tool, shown rather schematically at 50, has surfaces 104 brought into contact with the side surfaces 100. The burnishing tool 50 may provide low plasticity burnishing. One known low plasticity technique is disclosed in U.S. Patent 6,415,486. Other burnishing operations can be used however.

As shown in Figure 2, in a generic burnishing operation, the tool 50 is controlled with the computer numerical control (CNC) positioning control 56, and a pressure control 58. Broadly speaking, once the selected area 100 of the dovetail has been identified, a desired magnitude of compression from the tool surfaces 52 and a residual desired stress distribution are determined. The pressure is controlled against the surfaces to form zones of deformation having a deep layer of compressive stress. The pressure can be varied to achieve a desired residual stress distribution, and a magnitude of compression within the dovetail 24.

While burnishing works very well on the circumferential side surfaces 100, it is not as effective for the ends 102 and 104. Since the ends 102 and 104 have complex surfaces, they are not as easily treated with the burnishing technique. In addition, the burnishing of the sides 100 does result in undesirable stress distribution at the ends 102 and 104.

Thus, Figure 3 shows a step subsequent to the Figure 2 step. In Figure 3, shot peening masks 62 are mounted to enclose the ends 102 and 104. Shot peening tool 60 delivers particles 64 against the ends 102 and 104. The shot peening process is shown somewhat schematically in Figure 3, however, a worker of ordinary skill in the art would recognize how to provide shot peening to the surfaces 102 and 104.

After the two-step method is complete, the fan blade 20 has been surface treated at both of its ends 102/104, and the sides 100 of the dovetail such that it will provide effective operation in the challenging environment of the gas turbine engine.

In addition, as an initial optional step prior to the Figure 2 step, the entire dovetail may be initially shot peened prior to the burnishing.

The blade as disclosed above is for use as a fan blade. It is believed the teachings of this application would have most success when utilized on blades that will exist in lower temperature portions of a gas turbine engine. However, it is possible that blades in higher temperature regions may also benefit from the methods. In addition, the methods may have application in blades having air foils and dovetails for use in applications other than gas turbine engines. Thus, while the invention might have most application in fan blades and lower pressure compressor sections, it may also have application in other locations.

Although an embodiment has been disclosed, a worker of ordinary skill in the art would recognize that certain modification would come within the scope of this invention. For that reason, the following claims should be studied to determine the true scope and content of this invention.

## Claims

1. A method of surface treating a dovetail (20) in a blade (20) comprises the steps of:
providing a burnishing operation along circumferential sides (100) of said dovetail (24); and
**characterized in that** shot peening is subsequently provided to axial ends (102, 104) of said dovetail (24), wherein said axial ends (102, 104) are not regular surfaces, but have complex curved shapes.

2. The method as set forth in claim 1, wherein said burnishing operation is low plasticity burnishing.

3. The method as set forth in claim 2, wherein said burnishing technique includes a body (50) which is brought into contact with the circumferential sides (100) of said dovetail (24), said body (50) being controlled by a position control and a pressure control to apply a desired stress distribution and compressive load within the dovetail (24) along said circumferential sides (100).

4. The method as set forth in any preceding claim, wherein the entire dovetail (24) is subject to an initial shot peening process prior to the burnishing operation.

5. The method as set forth in any preceding claim, wherein said circumferential sides (100) have a more regular shape.

6. The method as set forth in any preceding claim, wherein said blade (20) is for use in a gas turbine engine.

7. The method as set forth in claim 6, wherein said blade (20) is a fan blade.

## Patentansprüche

1. Verfahren zur Oberflächenbehandlung eines Schwalbenschwanzes (20) in einer Schaufel (20), die folgenden Schritte umfassend:
Bereitstellen eines Prägepoliervorgangs entlang von Umfangsseiten (100) des Schwalbenschwanzes (24); und
**dadurch gekennzeichnet, dass** anschließend Kugelstrahlen an axialen Enden (102, 104) des Schwalbenschwanzes (24) bereitgestellt wird, wobei die axialen Enden (102, 104) keine gleichmäßigen Oberflächen sind, sondern komplexe gekrümmte Formen aufweisen.

2. Verfahren nach Anspruch 1, wobei es sich bei dem Prägepoliervorgang um Niederplastizitätsprägepolieren handelt.

3. Verfahren nach Anspruch 2, wobei die Prägepoliertechnik einen Körper (50) umfasst, der mit den Umfangsseiten (100) des Schwalbenschwanzes (24) in Kontakt gebracht wird, wobei der Körper (50) durch eine Positionssteuerung und eine Drucksteuerung gesteuert wird, um eine gewünschte Spannungsverteilung und Druckbelastung innerhalb des Schwalbenschwanzes (24) entlang der Umfangsseiten (100) anzuwenden.

4. Verfahren nach einem der vorhergehenden Ansprüche, wobei der gesamte Schwalbenschwanz (24) vor dem Prägepoliervorgang einem anfänglichen Kugelstrahlprozess unterzogen wird.

5. Verfahren nach einem der vorhergehenden Ansprüche, wobei die Umfangsseiten (100) eine gleichmäßigere Form aufweisen.

6. Verfahren nach einem der vorhergehenden Ansprüche, wobei die Schaufel (20) in einem Gasturbinenmotor verwendet wird.

7. Verfahren nach Anspruch 6, wobei es sich bei der Schaufel (20) um eine Gebläseschaufel handelt.

## Revendications

1. Procédé de traitement d'une queue d'aronde (20) dans une pale (20) qui comprend les étapes suivantes :
une opération de polissage le long des côtés circonférentiels (100) de ladite queue d'aronde (24) ; et
**caractérisé en ce qu'**un grenaillage est ultérieurement réalisé aux extrémités axiales (102, 104) de ladite queue d'aronde (24), dans lequel les extrémités axiales (102, 104) ne sont pas des surfaces régulières, mais ont des formes incurvées complexes.

2. Procédé tel que décrit dans la revendication 1, dans lequel ladite opération de polissage est une opération de polissage à faible plasticité.

3. Procédé tel que décrit dans la revendication 2, dans lequel ladite technique de polissage comprend un corps (50) qui est mis en contact avec les cotés circonférentiels (100) de ladite queue d'aronde (24), ledit corps (50) étant commandé par une commande de position et une commande de pression permettant d'appliquer une distribution de contrainte souhaitée et une charge compressive à l'intérieur de la queue d'aronde (24) le long desdits côtés circonférentiels (100).

4. Procédé tel que décrit dans une quelconque revendication précédente, dans lequel la totalité de la queue d'aronde (24) est soumise à un procédé de grenaillage initial avant l'opération de polissage.

5. Procédé tel que décrit dans une quelconque revendication précédente, lesdits côtés circonférentiels (100) ont une forme plus régulière.

6. Procédé tel que décrit dans une quelconque revendication précédente, dans lequel la pale (20) est utilisée pour un moteur de turbine à gaz.

7. Procédé tel que décrit dans la revendication 6, dans lequel ladite pale (20) et une pale de ventilateur.
